# EUROPEAN PATENT SPECIFICATION

(11) **EP 1 250 404 B1**
(45) Date of publication and mention of the grant of the patent: **18.02.2009**
(21) Application number: 00988046.9
(22) Date of filing: 12.12.2000
(51) Int. Cl.: C10L 1/16, C10L 1/198, C10L 1/238, C10L 10/04

(54) **Method of controlling injector deposits in direct injection gasoline engines using a fuel composition comprising a Mannich base detergent**
Methode zur Kontrolle von Ablagerungen an den Injektoren direkteinspritzender Ottomotoren durch Verwendung von Mannichbasen-Detergenzien enthaltenden Kraftstoffzusammensetzungen
Méthode de contrôle de dépôts sur les injecteurs d'un moteur à essence à injection directe en utilisant des compositions de carburants comprenant des détergents de Mannich

(30) Priority: 13.12.1999 US 170335 P
(43) Date of publication of application: 23.10.2002
(73) Proprietor: Afton Chemical Intangibles LLC, Richmond, Virginia 23219 (US)
(72) Inventor: ARADI, Allen, A., Richmond, VA 23219 (US); COLUCCI, William, J., Glen Allen, VA 23060 (US)
(74) Representative: Cresswell, Thomas Anthony
(86) International application number: PCT/US2000/033670
(87) International publication number: WO 2001/042399

(56) References cited:
- EP-A- 1 081 209
- US-A- 5 514 190
- US-A- 5 551 957
- US-A- 5 634 951
- US-A- 5 679 116
- US-A- 5 697 988
- US-A- 5 725 612
- US-A- 5 876 468
- US-A- 5 944 858
- US-A- 6 039 772
- US-A- 6 048 373

## Description

The present invention relates to methods for controlling, i.e. reducing or eliminating, injector deposits in direct injection gasoline (DIG) engines. More particularly, the invention relates to the use of fuel compositions comprising a spark-ignition fuel and a Mannich detergent that is a reaction product of an alkyl-substituted hydroxyaromatic compound, an aldehyde and an amine, in DIG engines.

Over the years considerable work has been devoted to additives for controlling (preventing or reducing) deposit formation in the fuel induction systems of spark-ignition internal combustion engines. In particular, additives that can effectively control fuel injector deposits, intake valve deposits and combustion chamber deposits represent the focal point of considerable research activities in the field and despite these efforts, further improvements are desired.

Direct injection gasoline (DIG) technology is currently on a steep developmental curve because of its high potential for improved fuel economy and power. Environmentally, the fuel economy benefits translate directly into lower carbon dioxide emissions, a greenhouse gas that is contributing to global warming.

There are a number of technical issues to be resolved with DIG technology, and one of them is injector performance with different gasoline fuels on the world market. Being located in the combustion chamber, DIG injectors are exposed to a much harsher environment than conventional engines with port fuel injectors (PFI). This more severe environment can accelerate fuel degradation and oxidation to form deposits.

DIG technology promises about a third less carbon dioxide emissions than comparable conventional multi-port injection (MPI). This is achieved with a 10-15% improvement in fuel consumption when operating in the homogeneous mode, and up to 35% when operating in the lean stratified mode. Fuel economy benefits also translate into fossil energy conservation and savings for the consumer. In addition, the DIG operation platform facilitates up to a 10% power increase for the same fuel burned in the equivalent MPI configuration.

Current generation DIG technologies have experienced deposit problems. Areas of concern are fuel rails, injectors, combustion chamber (CCD), crankcase soot loadings, and intake valves (IVD). Deposits in the intake manifold come in through the PCV valve and exhaust gas recirculation (EGR). Since there is no liquid fuel wetting the back of the intake valves, these deposits build up quite quickly.

Injector deposits in DIG engines restrict fuel flow and alter spray characteristics of the injectors. Low levels of fuel flow restriction can be compensated for by engine control electronics. However, high levels of flow restriction and any level of spray distortion cannot be adequately controlled electronically. In PFI engines, the cut-off point, as defined by the U.S. Environmental Protection Agency, for injector flow restriction is 5% for any one injector when tested in accordance with ASTM D 5598-94. This is because spray distortion is not much of an issue. In DIG engines, on the other hand, charge flow characteristics in the cylinder are critical to the calibrations that go into driveability, fuel economy, and emissions. In-cylinder charge motion in DIG engines is very sensitive to injector spray distortion. For this reason, DIG injector flow restriction cut-off point may be much lower than the 5% level assigned to PFI injector performance.

Fuel related deposits in direct injection gasoline (DIG) engines are an issue of current interest since this technology is now commercial in Japan and Europe. Fuel injector performance is at the forefront of this issue because the DIG combustion system relies heavily on fuel spray consistency to realize its advantages in fuel economy and power, and to minimize exhaust emissions. A consistent spray pattern enables more precise electronic control of the combustion event and the exhaust aftertreatment system.

There are numerous references teaching gasoline compositions containing Mannich detergents, for example, U.S. Patent Nos. 4,231,759; 5,514,190; 5,634,951; 5,697,988; 5,725,612; and 5,876,468. However, none of these references teach the use of fuel compositions containing Mannich detergents in DIG engines or the impact Mannich detergents have on injector deposits.

The present invention is directed to the use of a fuel composition comprising (a) a spark-ignition internal combustion fuel; and (b) a Mannich base detergent that is the reaction product of an alkyl-substituted hydroxyaromatic compound, an aldehyde and an amine. Further, this invention is directed to methods of controlling injector deposits in DIG engines.

The Mannich condensation products of the present invention comprise the reaction products of an alkyl-substituted hydroxyaromatic compound, aldehydes and amines. The alkyl-substituted hydroxyaromatic compound, aldehydes and amines used in preparing the Mannich reaction products of the present invention may be any such compounds known and applied in the art, in accordance with the foregoing limitations.

Representative alkyl-substituted hydroxyaromatic compounds that may be used in forming the present Mannich base products are polypropylphenol (formed by alkylating phenol with polypropylene), polybutylphenols (formed by alkylating phenol with polybutenes and/or polyisobutylene), and polybutyl-copolypropylphenols (formed by alkylating phenol with a copolymer of butylene and/or butylene and propylene). Other similar long-chain alkylphenols may also be used. Examples include phenols alkylated with copolymers of butylene and/or isobutylene and/or propylene, and one or more mono-olefinic comonomers copolymerizable therewith (e.g., ethylene, 1-pentene, 1-hexene, 1-octene, 1-decene, etc.) where the copolymer molecule contains at least 50% by weight, of butylene and/or isobutylene and/or propylene units. The comonomers polymerized with propylene or such butenes may be aliphatic and can also contain non-aliphatic groups, e.g., styrene, o-methylstyrene, p-methylstyrene, divinyl benzene and the like. Thus in any case the resulting polymers and copolymers used in forming the alkyl-substituted hydroxyaromatic compounds are substantially aliphatic hydrocarbon polymers.

Polybutylphenol (formed by alkylating phenol with polybutylene) is preferred. Unless otherwise specified herein, the term "polybutylene" is used in a generic sense to include polymers made from "pure" or "substantially pure" 1-butene or isobutene, and polymers made from mixtures of two or all three of 1-butene, 2-butene and isobutene. Commercial grades of such polymers may also contain insignificant amounts of other olefins. So-called high reactivity polyisobutenes having relatively high proportions of polymer molecules having a terminal vinylidene group are also suitable for use in forming the long chain alkylated phenol reactant. Suitable high-reactivity polyisobutenes include those polyisobutenes that comprise at least 20% of the more reactive methylvinylidene isomer, preferably at least 50% and more preferably at least 70%. Suitable polyisobutenes include those prepared using BF₃ catalysts. The preparation of such polyisobutenes in which the methylvinylidene isomer comprises a high percentage of the total composition is described in U.S. Pat. Nos. 4,152,499 and 4,605,808.

The alkylation of the hydroxyaromatic compound is typically performed in the presence of an alkylating catalyst at a temperature in the range of 0 to 200 °C, preferably 0 to 100°C. Acidic catalysts are generally used to promote Friedel-Crafts alkylation. Typical catalysts used in commercial production include sulphuric acid, BF₃, aluminum phenoxide, methanesulphonic acid, cationic exchange resin, acidic clays and modified zeolites.

The long chain alkyl substituents on the benzene ring of the phenolic compound are derived from polyolefins having a number average molecular weight (Mₙ) of from 500 to 3000, preferably from 500 to 2100, as determined by gel permeation chromatography (GPC). It is also preferred that the polyolefin used have a polydispersity (weight average molecular weight/number average molecular weight) in the range of 1 to 4 (preferably from 1 to 2) as determined by GPC.

The Mannich detergent may be made from a long chain alkylphenol. However, other phenolic compounds may be used including high molecular weight alkyl-substituted derivatives of cresol, resorcinol, hydroquinone, catechol, hydroxydiphenyl, benzylphenol, phenethylphenol, naphthol, tolylnaphthol, among others. Preferred for the preparation of the Mannich detergents are the polyalkylphenol and polyalkylcresol reactants, e.g., polypropylphenol, polybutylphenol, polypropylcresol and polybutylcresol, wherein the alkyl group has a number average molecular weight of 500 to 2100, while the most preferred alkyl group is a polybutyl group derived from polyisobutylene having a number average molecular weight in the range of 800 to 1300.

The preferred configuration of the alkyl-substituted hydroxyaromatic compound is that of a para-substituted mono-alkylphenol or a para-substituted monoalkyl ortho-cresol. However, any alkyl phenol readily reactive in the Mannich condensation reaction may be employed. Thus, Mannich products made from alkylphenols having only one ring alkyl substituent, or two or more ring alkyl substituents are suitable for use in this invention. The long chain alkyl substituents may contain some residual unsaturation, but in general, are substantially saturated alkyl groups.

Representative amine reactants include, but are not limited to, alkylene polyamines having at least one suitably reactive primary or secondary amino group in the molecule. Other substituents such as cyano, amido, etc., can be present in the polyamine. In a preferred embodiment, the alkylene polyamine is a polyethylene polyamine. Suitable alkylene polyamine reactants include ethylenediamine, diethylenetriamine, triethylenetetramine, tetraethylenepentamine, and mixtures of such amines having nitrogen contents corresponding to alkylene polyamines of the formula H₂N-(A-NH-)ₙH, where A is divalent ethylene or propylene and n is an integer of from 1 to 10, preferably 1 to 4. The alkylene polyamines may be obtained by the reaction of ammonia and dihalo alkanes, such as dichloro alkanes.

In another preferred embodiment of the present invention, the amine is an aliphatic diamine having one primary or secondary amino group and at least one tertiary amino group in the molecule. Examples of suitable polyamines include N,N,N",N"-tetraalkyldialkylenetriamines (two terminal tertiary amino groups and one central secondary amino group), N,N,N',N"-tetraalkyltrialkylenetetramines (one terminal tertiary amino group, two internal tertiary amino groups and one terminal primary amino group), N,N,N',N",N"'-pentaalkyltrialkylenetetramines (one terminal tertiary amino group, two internal tertiary amino groups and one terminal secondary amino group), N,N-dihydroxyalkyl- alpha, omega-alkylenediamines (one terminal tertiary amino group and one terminal primary amino group), N,N,N'-trihydroxyalkyl-alpha, omega-alkylenediamines (one terminal tertiary amino group and one terminal secondary amino group), tris(dialkylaminoalkyl)aminoalkylmethanes (three terminal tertiary amino groups and one terminal primary amino group), and similar compounds, wherein the alkyl groups are the same or different and typically contain no more than 12 carbon atoms each, and which preferably contain from 1 to 4 carbon atoms each. Most preferably these alkyl groups are methyl and/or ethyl groups. Preferred polyamine reactants are N, N-dialkyl- alpha, omega-alkylenediamine, such as those having from 3 to 6 carbon atoms in the alkylene group and from 1 to 12 carbon atoms in each of the alkyl groups, which most preferably are the same but which can be different. Most preferred is N,N-dimethyl-1,3-propanediamine and N-methyl piperazine.

Examples of polyamines having one reactive primary or secondary amino group that can participate in the Mannich condensation reaction, and at least one sterically hindered amino group that cannot participate directly in the Mannich condensation reaction to any appreciable extent include N-(tert-butyl)-1,3-propanediamine, N-neopentyl-1,3-propanediamine, N-(tert-butyl)-1-methyl-1,2-ethanediamine, N-(tert-butyl)-1-methyl-1,3-propanediamine, and 3,5-di(tert-butyl)aminoethylpiperazine.

Representative aldehydes for use in the preparation of the Mannich base products include the aliphatic aldehydes such as formaldehyde, acetaldehyde, propionaldehyde, butyraldehyde, valeraldehyde, caproaldehyde, heptaldehyde, stearaldehyde. Aromatic aldehydes which may be used include benzaldehyde and salicylaldehyde. Illustrative heterocyclic aldehydes for use herein are furfural and thiophene aldehyde, etc. Also useful are formaldehyde-producing reagents such as paraformaldehyde, or aqueous formaldehyde solutions such as formalin. Most preferred is formaldehyde or formalin.

The condensation reaction among the alkylphenol, the specified amine(s) and the aldehyde may be conducted at a temperature typically in the range of 40° to 200° C. The reaction can be conducted in bulk (no diluent or solvent) or in a solvent or diluent. Water is evolved and can be removed by azeotropic distillation during the course of the reaction. Typically, the Mannich reaction products are formed by reacting the alkyl-substituted hydroxyaromatic compound, the amine and aldehyde in the molar ratio of 1.0:0.5-2.0:1.0-3.0, respectively.

Suitable Mannich base detergents for use in the present invention include those detergents taught in U.S. Patent Nos. 4,231,759; 5,514,190; 5,634,951; 5,697,988; 5,725,612; and 5,876,468.

When formulating the fuel compositions of this invention, the Mannich base detergent (with our without other additives) is employed in an amount of 38.56 to 231.6 ppm sufficient to reduce or eliminate deposits, including injector deposits. Thus the fuels will contain minor amounts of the Mannich base detergent proportioned so as to prevent or reduce formation of injector deposits in direct injection gasoline engines. (10 to 60 ptb, (pounds by weight of additive per thousand barrels by volume of fuel)).

The fuel compositions of the present invention may contain supplemental additives in addition to the Mannich detergants described above. Said supplemental additives include additional dispersants/detergents, antioxidants, carrier fluids, metal deactivators, dyes, markers, corrosion inhibitors, biocides, antistatic additives, drag reducing agents, demulsifiers, dehazers, anti-icing additives, antiknock additives, antivalve-seat recession additives, lubricity additives and combustion improvers.

Cyclopentadienyl manganese tricarbonyl compounds such as methylcyclopentadienyl manganese tricarbonyl are preferred combustion improvers because of their outstanding ability to reduce tailpipe emissions such as NOx and smog forming precursors and to significantly improve the octane quality of gasolines, both of the conventional variety and of the "reformulated" types.

The base fuels used in formulating the fuel compositions of the present invention include any base fuels suitable for use in the operation of DIG engines such as leaded or unleaded motor gasolines, and so-called reformulated gasolines which typically contain both hydrocarbons of the gasoline boiling range and fuel-soluble oxygenated blending agents ("oxygenates"), such as alcohols, ethers and other suitable oxygen-containing organic compounds. Preferably, the fuel is a mixture of hydrocarbons boiling in the gasoline boiling range. This fuel may consist of straight chain or branch chain paraffins, cycloparaffins, olefins, aromatic hydrocarbons or any mixture of these. The gasoline can be derived from straight run naptha, polymer gasoline, natural gasoline or from catalytically reformed stocks boiling in the range from 26.7 to 232°C (80° to 450°F). The octane level of the gasoline is not critical and any conventional gasoline may be employed in the practice of this invention.

Oxygenates suitable for use in the present invention include methanol, ethanol, isopropanol, t-butanol, mixed C1 to C5 alcohols, methyl tertiary butyl ether, tertiary amyl methyl ether, ethyl tertiary butyl ether and mixed ethers. Oxygenates, when used, will normally be present in the base fuel in an amount below 30% by volume, and preferably in an amount that provides an oxygen content in the overall fuel in the range of about 0.5 to 5 percent by volume.

In a preferred embodiment, the Mannich detergents of this invention are used with a liquid carrier or induction aid. Such carriers can be of various types, such as for example liquid poly-α-olefin oligomers, mineral oils, liquid poly(oxyalkylene) compounds, liquid alcohols or polyols, polyalkenes, liquid esters, and similar liquid carriers. Mixtures of two or more such carriers can be employed.

Preferred liquid carriers include 1) a mineral oil or a blend of mineral oils that have a viscosity index of less than 120, 2) one or more poly-α-olefin oligomers, 3) one or more poly(oxyalkylene) compounds having an average molecular weight in the range of 500 to 3000, 4) polyalkenes, 5) polyalkyl-substituted hydroxyaromatic compounds or 6) mixtures thereof. The mineral oil carrier fluids that can be used include paraffinic, naphthenic and asphaltic oils, and can be derived from various petroleum crude oils and processed in any suitable manner. For example, the mineral oils may be solvent extracted or hydrotreated oils. Reclaimed mineral oils can also be used. Hydrotreated oils are the most preferred. Preferably the mineral oil used has a viscosity at 40°C of less than 345 cst (1600 SUS), and more preferably between 65 and 324 cSt (300 and 1500 SUS) at 40°C. Paraffinic mineral oils most preferably have viscosities at 40°C in the range of 102 to 151 cSt (475 SUS to 700 SUS). For best results, it is highly desirable that the mineral oil have a viscosity index of less than 100, more preferably, less than 70 and most preferably in the range of from 30 to 60.

The poly-α-olefins (PAO) suitable for use as carrier fluids are the hydrotreated and unhydrotreated poly-α-olefin oligomers, i.e., hydrogenated or unhydrogenated products, primarily trimers, tetramers and pentamers of α-olefin monomers, which monomers contain from 6 to 12, generally 8 to 12 and most preferably 10 carbon atoms. Their synthesis is outlined in Hydrocarbon Processing, Feb. 1982, page 75 et seq., and in U.S. Pat. Nos. 3,763,244; 3,780,128; 4,172,855; 4,218,330; and 4,950,822. The usual process essentially comprises catalytic oligomerization of short chain linear alpha olefins (suitably obtained by catalytic treatment of ethylene). The poly-α-olefins used as carriers will usually have a viscosity (measured at 100°C) in the range of 2 to 20 centistokes (cSt). Preferably, the poly-α-olefin has a viscosity of at least 8 cSt, and most preferably 10 cSt at 100°C.

The poly (oxyalkylene) compounds which are among the preferred carrier fluids for use in this invention are fuel-soluble compounds which can be represented by the following formula

R₁-(R₂-0)ₙ-R₃

wherein R₁ is typically a hydrogen, alkoxy, cycloalkoxy, hydroxy, amino, hydrocarbyl (e.g., alkyl, cycloalkyl, aryl, alkylaryl, aralkyl, etc.), amino-substituted hydrocarbyl, or hydroxy-substituted hydrocarbyl group, R₂ is an alkylene group having 2-10 carbon atoms (preferably 2-4 carbon atoms), R₃ is typically a hydrogen, alkoxy, cycloalkoxy, hydroxy, amino, hydrocarbyl (e.g., alkyl, cycloalkyl, aryl, alkylaryl, aralkyl, etc.), amino-substituted hydrocarbyl, or hydroxy-substituted hydrocarbyl group, and n is an integer from 1 to 500 and preferably in the range of from 3 to 120 representing the number (usually an average number) of repeating alkyleneoxy groups. In compounds having multiple -R₂-O- groups, R₂ can be the same or different alkylene group and where different, can be arranged randomly or in blocks. Preferred poly (oxyalkylene) compounds are monools comprised of repeating units formed by reacting an alcohol with one or more alkylene oxides, preferably one alkylene oxide, preferably propylene oxide or butylene oxide.

The average molecular weight of the poly (oxyalkylene) compounds used as carrier fluids is preferably in the range of from 500 to 3000, more preferably from 750 to 2500, and most preferably from above 1000 to 2000.

One useful sub-group of poly (oxyalkylene) compounds is comprised of the hydrocarbyl-terminated poly(oxyalkylene) monools such as are referred to in the passage at column 6, line 20 to column 7 line 14 of U.S. Pat. No. 4,877,416 and references cited in that passage.

A preferred sub-group of poly (oxyalkylene) compounds is comprised of one or a mixture of alkylpoly (oxyalkylene)monools which in its undiluted state is a gasoline-soluble liquid having a viscosity of at least 70 centistokes (cSt) at 40°C and at least 13 cSt at 100°C. Of these compounds, monools formed by propoxylation of one or a mixture ofalkanols having at least 8 carbon atoms, and more preferably in the range of 10 to 18 carbon atoms, are particularly preferred.

The poly (oxyalkylene) carriers used in the practice of this invention preferably have viscosities in their undiluted state of at least 60 cSt at 40°C (more preferably at least 70 cSt at 40°C) and at least 11 cSt at 100°C (more preferably at least 13 cSt at 100°C). In addition, the poly (oxyalkylene) compounds used in the practice of this invention preferably have viscosities in their undiluted state of no more than 400 cSt at 40°C and no more than 50 cSt at 100°C. More preferably, their viscosities will not exceed 300 cSt at 40°C and will not exceed 40 cSt at 100°C.

Preferred poly (oxyalkylene) compounds also include poly (oxyalkylene) glycol compounds and monoether derivatives thereof that satisfy the above viscosity requirements and that are comprised of repeating units formed by reacting an alcohol or polyalcohol with an alkylene oxide, such as propylene oxide and/or butylene oxide with or without use of ethylene oxide, and especially products in which at least 80 mole % of the oxyalkylene groups in the molecule are derived from 1,2-propylene oxide. Details concerning preparation of such poly(oxyalkylene) compounds are referred to, for example, in Kirk-Othmer, Encyclopedia of Chemical Technology, Third Edition, Volume 18, pages 633-645 (Copyright 1982 by John Wiley & Sons), and in references cited therein. U.S. Patent Nos. 2,425,755; 2,425,845; 2,448,664; and 2,457,139 also describe such procedures.

The poly (oxyalkylene) compounds, when used, pursuant to this invention will contain a sufficient number of branched oxyalkylene units (e.g., methyldimethyleneoxy units and/or ethyldimethyleneoxy units) to render the poly (oxyalkylene) compound gasoline soluble.

Suitable poly (oxyalkylene) compounds for use in the present invention include those taught in U.S. Patent Nos. 5,514,190; 5,634,951; 5,697,988; 5,725,612; 5,814,111 and 5,873,917.

The polyalkenes suitable for use as carrier fluids in the present invention include polypropene and polybutene. The polyalkenes of the present invention preferably have a molecular weight distribution (Mw/Mn) of less than 4. In a preferred embodiment, the polyalkenes have a MWD of 1.4 or below. Preferred polybutenes have a number average molecular weight (Mn) of from 500 to 2000, preferably 600 to 1000, as determined by gel permeation chromatography (GPC). Suitable polyalkenes for use in the present invention are taught in US patent No. 6,048,373.

The polyalkyl-substituted hydroxyaromatic compounds suitable for use as carrier fluids in the present invention include those compounds known in the art as taught in U.S. Patent Nos. 3,849,085; 4,231,759; 4,238,628; 5,300,701; 5,755,835 and 5,873,917.

In some cases, the Mannich base detergent can be synthesized in the carrier fluid. In other instances, the preformed detergent is blended with a suitable amount of the carrier fluid. If desired, the detergent can be formed in a suitable carrier fluid and then blended with an additional quantity of the same or a different carrier fluid.

When the carrier fluids are used in combination with the Mannich detergents, the ratio (wt/wt) of detergent to carrier fluid(s) is typically in the range of from 1:0.1 to 1:3.

The additives used in formulating the preferred fuels of the present invention can be blended into the base fuel individually or in various sub-combinations. However, it is preferable to blend all of the components concurrently using an additive concentrate as this takes advantage of the mutual compatibility afforded by the combination of ingredients when in the form of an additive concentrate. Also use of a concentrate reduces blending time and lessens the possibility of blending errors.

The present invention comprises a method of controlling injector deposits in a direct injection gasoline engine, said method comprising providing as fuel for the operation of said direct injection engine a fuel composition comprising a Mannich base detergent that is the reaction product of an alkyl-substitued hydroxyaromatic compound, an aldehyde and an amine, to reduce the volume of injector deposits in a direct injection gasoline engine operated on a spark-ignition fuel containing a deposit-controlling amount of said Mannich base detergent to below the volume of injector deposits in said direct injection gasoline engine operated in the same manner on the same spark-ignition fuel except that it is devoid of Mannich base detergent.

Another preferred embodiment of the present invention comprises the above method, wherein the fuel composition is an unleaded fuel composition.

### EXAMPLES

The practice and advantages of this invention are demonstrated by the following examples which are presented for purposes of illustration and not limitation.

To demonstrate the effectiveness of the additive systems of the present invention in reducing injector deposits in direct injection gasoline engines, tests were conducted in a 1982 Nissan Z22e (2.2 liter) dual-sparkplug, four-cylinder engine modified to run in a homogeneous direct injection mode, at a fuel rich lambda of 0.8 to accelerate injector deposit formation. Details of this test are set forth in Aradi. A. A., Imoehl, B., Avery, N. L., Wells, P. P., and Grosser, R. W.: " The Effect of Fuel Composition and Engine Operating Parameters Oil Injector Deposits in a High-Pressure Direct Injection Gasoline (DIG) Research Engine ", SAE Technical Paper 1999-01-3690 (1999*).*

Modifications to the engine included replacing the exhaust-side spark plugs with pre-production high-pressure common rail direct injectors, removing the OEM spark and fuel system, and installing a high-pressure fuel system and universal engine controller. Table 1 summarizes the specifications of the modified test engine. For homogeneous combustion, flat-top pistons and the conventional gasoline spark ignition combustion chamber design were found to be sufficient for this type of research work. The injectors were located on the hot (i.e. exhaust) side of the engine to favor high tip temperatures to promote injector deposit.

The rate of injector deposit formation was evaluated through the use of this specially developed steady-state engine test. Engine operating conditions for each test point were determined by mapping injector tip temperatures throughout the engine operating map range. The injectors were modified with thermocouples at the tip. Key parameters were inlet air and fuel temperatures, engine speed, and engine load. The inlet air and fuel temperatures were subsequently controlled at 35°C and 32 °C, respectively.

**Table 1: Test Engine Specifications**

| Type | Four Cylinder In-Line 2.2 L Nissan Engine Converted for DI Operation |
|---|---|
| Displacement | 2187 cubic centimeters |
| Plugs/cylinder | 1 (stock configuration: 2) |
| Valves/cylinder | 2 |
| Bore | 87 millimeters |
| Stroke | 92 millimeters |
| Fuel System | Common Rail High Pressure Direct Injection |
| Fuel Pressure | 6900 kPa (closed loop) |
| Engine Controller | Universal Laboratory System |
| Injection Timing | 300 degrees BTDC |
| Coolant Temperature (°C) | 85 |
| Oil Temperature (°C) | 95 |

At constant inlet air/fuel temperature and engine load, tip temperature remained constant at engine speeds of 1500, 2000, 2500, and 3000 rpm. However, at constant engine speed, tip temperatures increase with load. For five load points, 200, 300, 400, 500, and 600 mg/stroke air charge, increasing tip temperatures of 120, 140, 157, 173, and 184 °C, respectively, were observed for each load.

Through previous research, it was determined that a tip temperature of 173 °C provided optimum conditions for injector deposit formation in this engine. Table 2 sets forth the key test conditions used in performing the evaluation of the additives of the present invention.

**Table 2: Key Test Conditions**

| | |
|---|---|
| Engine Speed (rpm) | 2500 |
| Inlet Air Temp. (°C) | 35 |
| Inlet Fuel Temp. (°C) | 32 |
| Exit Coolant Temp. (°C) | 85 |
| Exit Oil Temp. (°C) | 95 |
| Load (mg air/stroke) | 500 |
| Injector Tip Temp. (°C) | 173 |

The test was divided into three periods: engine warm-up, an operator-assisted period, and test period. Engine speed was controlled using the engine dynamometer controller, and the engine throttle was manipulated to control air charge using a standard automotive airflow meter as feedback in a closed-loop control system. Engine fueling was controlled in two ways. During warm-up, injector pulse width was controlled using a standard mass airflow strategy and exhaust gas sensor controlling the air/fuel mixture to stoichiometric. During the operator interaction period, the pulse width was manually set for each injector using wide-range lambda sensors in the exhaust port of each cylinder. Fuel flow was measured using a volumetric flow meter and a temperature-corrected density value was used to calculate mass flow.

Each fuel was run at a load condition of 500 mg/stroke. Injector deposit formation was followed by measuring total engine fuel flow at fixed speed, air charge (mass of air per intake stroke), and the lambda signal from each cylinder over a test period of six hours.

To help minimize injector-to-injector variability the same set of injectors was used for all tests at a particular engine load, with each injector always in the same cylinder.

Gasoline fuel compositions were subjected to the above-described engine tests whereby the substantial effectiveness of these compositions in minimizing injector deposit formation was conclusively demonstrated. The fuel used for these tests was a Howell EEE fuel having a T₉₀ (°C) of 160, an olefin content of 1.2% and a sulfur content of 20 ppm. The detergent additives used and the percent flow loss for the fuels at tip temperatures of 173°C are set forth in Table 3.

The Mannich detergents used in the following examples were derived by reaction of a long chain alkylated cresol ("PBC") or long-chain alkylated phenol ("PBP"), N,N-dimethyl-1,3-propanediamine ("DMPD"), and formaldehyde ("FA"). The PBC and PBP were formed by reacting o-cresol or phenol, respectively, with a polyisobutylene having an alkylvinylidene isomer content of less than 10% and a number average molecular weight of about 900. Comparative examples 6 and 7 contained 60 ptb of two different commercially-available polyetheramines.

**Table 3: Percent flow loss**

| **Sample #** | **Detergent (ptb)** | **Carrier Fluid (ptb)** | **Flow loss (%)** |
|---|---|---|---|
| 1* | --- | --- | 10.24 |
| 2 | Mannich-1^{A}(33) | CF-1^{C}(27) | 3.14 |
| 3 | Mannich-1 (33) | CF-2^{D} (27) | 3.44 |
| 4 | Mannich-2^{B} (31) | CF-1 (27) | 5.33 |
| 5 | Mannich-2 (33) | CF-1 (27) | 4.64 |
| 6* | PEA-1 (60) | --- | 8.17 |
| 7* | PEA-2 (60) | --- | 9.33 |

| | | | |
|---|---|---|---|
| * Comparative examples ^{A} Mannich-1 was prepared from phenol ^{B} Mannich-2 was prepared from o-cresol ^{C} CF-1 was an aryl end-capped polyoxypropylene monool ^{D} CF-2 was a branched-alkyl end-capped polyoxypropylene monool | | | |

It is clear from examination of Table 3 that the Mannich detergents provide superior performance in controlling DIG injector flow loss compared to other classes of gasoline detergents.

As used herein the term "fuel-soluble" or "gasoline-soluble" means that the substance under discussion should be sufficiently soluble at 20° C in the base fuel selected for use to reach at least the minimum concentration required to enable the substance to serve its intended function. Preferably, the substance will have a substantially greater solubility in the base fuel than this. However, the substance need not dissolve in the base fuel in all proportions.

## Claims

1. A method of controlling injector deposits in a direct injection gasoline engine, said method comprising providing as fuel for the operation of said direct injection engine a fuel composition comprising a Mannich base detergent that is a reaction product of an alkyl-substituted hydroxyaromatic compound, an aldehyde and an amine, wherein the detergent is supplied to the fuel composition in an amount in the range of 38.56 to 231.6 ppm (10 to 60 ptb).

2. The method of claim 1 wherein the spark-ignition fuel comprises gasoline.

3. The method of claim 1 wherein the spark-ignition fuel comprises a blend of hydrocarbons of the gasoline boiling range and at least one fuel-soluble oxygenated compound.

4. The method of claim 1 wherein the fuel composition further comprises a carrier fluid selected from 1) a mineral oil or a blend of mineral oils that have a viscosity index of less than 120, 2) one or more poly-α-olefin oligomers, 3) one or more poly (oxyalkylene) compounds having an average molecular weight in the range of 500 to 3000, 4) one or more polyalkenes, 5) one or more polyalkyl-substituted hydroxyaromatic compounds and 6) mixtures thereof.

5. The method of claim 4 wherein the carrier fluid comprises at least one poly (oxyalkylene) compound.

6. The method of claim 1 wherein the fuel composition further comprises at least one additive selected from antioxidants, carrier fluids, metal deactivators, dyes, markers, corrosion inhibitors, biocides, antistatic additives, drag reducing agents, demulsifiers, dehazers, anti-icing additives, antiknock additives, antivalve-seat recession additives, lubricity additives and combustion improvers.

7. A method according to any one of the preceding claims, wherein the fuel composition is unleaded.

## Patentansprüche

1. Eine Methode für die Kontrolle von Einspritzerablagerungen in einem Benzinmotor mit direkter Einspritzung, **dadurch gekennzeichnet, dass** die besagte Methode als Brennstoff für den Betrieb des besagten Motors mit direkter Einspritzung eine Brennstoffzusammensetzung umfasst, die ein Mannich-Basen-Detergens umfasst, das ein Reaktionsprodukt eines alkylsubstituierten hydroxyaromatischen Verbundstoffes, eines Aldehyds und eines Amins ist, wobei das Detergens der Brennstoffzusammensetzung in einer Menge im Bereich von 38,56 bis 231,6 ppm (10 bis 60 ptb) zugeführt wird.

2. Methode nach Anspruch 1, **dadurch gekennzeichnet, dass** der Funkenzündungsbrennstoff Benzin umfasst.

3. Methode nach Anspruch 1, **dadurch gekennzeichnet, dass** der Funkenzündungsbrennstoff eine Mischung aus Kohlenwasserstoffen des Benzinsiedepunktbereichs und mindestens einen brennstofflöslichen oxygenierten Verbundstoff umfasst.

4. Methode nach Anspruch 1, **dadurch gekennzeichnet, dass** die Brennstoffzusammensetzung des Weiteren eine Trägerflüssigkeit umfasst, die ausgewählt wird aus 1) einem Mineralöl oder einer Mischung von Mineralölen mit einem Viskositätsindex von weniger als 120, 2) einem oder mehreren Poly-α-Olefinoligomeren, 3) einem oder mehreren Poly(oxyalkylen)-Verbundstoffen mit einem mittleren Molekulargewicht im Bereich von 500 bis 3000, 4) einem oder mehreren Polyalkenen, 5) einem oder mehreren polyalkylsubstituierten hydroxyaromatischen Verbundstoffen und 6) Mischungen daraus.

5. Methode nach Anspruch 4, **dadurch gekennzeichnet, dass** die Trägerflüssigkeit mindestens einen Poly(oxyalkylen)-Verbundstoff umfasst.

6. Methode nach Anspruch 1, **dadurch gekennzeichnet, dass** die Brennstoffzusammensetzung des Weiteren mindestens ein Additiv umfasst, das ausgewählt wurde aus Antioxidanzien, Trägerflüssigkeiten, Metalldeaktivatoren, Farbstoffen, Markern, Korrosionshemmern, Bioziden, antistatischen Additiven, widerstandsreduzierenden Wirkstoffen, Demulgatoren, Entnebelungsmitteln, Enteisungsadditiven, Antiklopfadditiven, Antiventilsitzrezessionsadditiven, Schmiermitteladditiven und verbrennungsfördernden Zusätzen.

7. Methode nach irgendeinem der obigen Ansprüche, **dadurch gekennzeichnet, dass** die Brennstoffzusammensetzung bleifrei ist.

## Revendications

1. Procédé de régulation de dépôts pour injecteurs dans un moteur à essence à injection directe, ledit procédé comprenant l'utilisation comme carburant pour le fonctionnement dudit moteur à injection directe une composition de carburant comprenant un détergent d'une base de Mannich qui représente un produit de la réaction d'un composé hydroxy aromatique substitué par un alkyle, un aldéhyde et une amine, dans lequel le détergent est appliqué à la composition de carburant en une teneur située dans la plage de 38,56 à 231,6 ppm (10 à 60 ptb).

2. Procédé selon la revendication 1, dans lequel le carburant à allumage par étincelle comprend de l'essence.

3. Procédé selon la revendication 1, dans lequel le carburant à allumage par étincelle comprend un mélange d'hydrocarbures de la gamme de température d'ébullition de l'essence et au moins un composé oxygéné soluble dans le carburant.

4. Procédé selon la revendication 1, dans lequel la composition de carburant comprend en outre un liquide porteur sélectionné à partir de : 1) une huile minérale ou un mélange d'huiles minérales qui présentent un indice de viscosité inférieur à 120, 2) un ou plusieurs oligomères de poly-α-oléfine, 3) un ou plusieurs composés de poly (oxyalkylène) présentant un poids moléculaire moyen dans la plage de 500 à 3 000, 4) un ou plusieurs polyalkylènes, 5) un ou plusieurs composés hydroxy-aromatiques substitués par un polyalkyle et 6) des mélanges de ceux-ci.

5. Procédé selon la revendication 4, dans lequel le liquide porteur comprend au moins un composé de poly (oxyalkylène).

6. Procédé selon la revendication 1, dans lequel la composition de carburant comprend en outre au moins un additif sélectionné à partir d'antioxydants, de liquides porteurs, de désactivateurs métalliques, d'agents colorants, de marqueurs, d'inhibiteurs de corrosion, de biocides, d'additifs antistatiques, d'agents de réduction de traînée, d'agents désémulsifiants, d'agents désémulsionnants, d'additifs de dégivrage, d'additifs antidétonants, d'additifs contre les défauts de creusement des sièges de soupapes, d'additifs de lubrification et d'agents d'amélioration de la combustion.

7. Procédé selon l'une quelconque des revendications précédentes, dans lequel la composition de carburant est sans plomb.
